Europäisches Patentamt

(19) European Patent Office

Office européen des brevets

(11) Publication number: **0 231 625**
**B1**

# EUROPEAN PATENT SPECIFICATION

(45) Date of publication of the patent specification:
28.03.90

(51) Int. Cl.⁴: **G11B 5/60**

(21) Application number: **86309717.6**

(22) Date of filing: **12.12.86**

(54) Taper-flat slider.

(30) Priority: **06.01.86 US 816505**

(43) Date of publication of application:
**12.08.87 Bulletin 87/33**

(45) Publication of the grant of the patent:
**28.03.90 Bulletin 90/13**

(84) Designated Contracting States:
**AT BE CH DE FR GB IT LI LU NL SE**

(56) References cited:
**EP-A- 0 107 411**
**US-A- 3 823 416**
**US-A- 4 553 184**

**IBM Technical Disclosure Bulletin Vol. 26, No. 6,
November 1983, pages 2953-2954**

(73) Proprietor: **UNISYS CORPORATION, 1, Burroughs Place,
Detroit Michigan 48232(US)**

(72) Inventor: **Ananth, Raju S., 6904 Windsor Way, San Jose
California 95129(US)**

(74) Representative: **Kirby, Harold Douglas Benson et al, G.F.
Redfern & Company Marlborough Lodge 14 Farncombe
Road, Worthing West Sussex BN11 2BT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to a burnishing arrangement comprising recording slider means adapted to be flown above prescribed media, the recording means comprising a number of identical elongate air-bearing rail surface means adapted to be flown relatively close to said media. It also relates to a method of burnishing magnetic recording surfaces comprising the steps of providing magnetic recording slider means adapted to be translated in flying relation with said surfaces, the recording means comprising a number of air-bearing rail surface means adapted to be flown above said surfaces relatively close thereto, this surface means being provided with a plurality of identical elongate air-bearing surfaces.

## BACKGROUND, FEATURES OF INVENTION

Magnetic recording systems using transducer heads that fly on an air-bearing film above magnetic recording media are well known in the art. Workers have developed and are continuing to develop such heads -- for instance, enabling them to fly at a head spacing, between the transducer gap and the recording medium surface that is smaller and smaller -- today, quite commonly reduced to as little as a few hundredths of $\mu$m. Such minuscule head spacing obviously complicates other problems, such as head stability.

### Purpose:

One purpose hereof is to teach the design of a simple burnishing slider essentially by modifying a slider that would otherwise be used as a data head on the rigid disk to read and write.

Presently, workers used special heads that are designed to fly at the desired flying heights above the disk for "burnishing" purposes. "Burnishing" an oxide disk is intended to remove small asperities, such as iron oxide particles and resin-binder materials, so that the data head will not encounter such "material peaks" and be destabilized, damaged, etc.

Conventionally, the overall concept of a burnishing head design is quite different from the design of the actual head that is used to write and read data from the disk. The popular data heads are derived from what is gnerally known as "taper-flat" sliders that have two or more flat air bearing pads and front ramps on all the pads for flying stability.

A "crown head" design is used as burnishing head in a present-day drive. This has crowned air bearing pads (convex to the disk) and high preload ( ~ 350 g), and is one of the popular burnishing sliders. The air bearing characteristics of this "crowned" burnishing slider are such that the head is unstable especially when it is being loaded/unloaded onto/from the disk. There are other burnishing head designs, for example one that uses heads requiring special manufacturing steps (cf. "Disk Burnishing Head Design for High Performance Disk Files", K.H. Elser and H.G. Wang, IBM Tech. Disclosure Bulletin, Vol. 26, November 1983).

Some workers have believed that the instability of flat pivoted sliders would be cured somewhat using a convex slider face (e.g., see IBM Journal July 1959 pp. 260 et seq.). However, no limits were ever appreciated (e.g., whether cylindrical or spherical; if spherical-convex, what radius limit); nor was any relation ever appreciated between spherical type faces and an "entry-taper", especially with respect to flexible media like floppy disks. This invention involves using a Taper-Flat (TF) slider (magnetic recording head) for "burnishing". Workers are well aware of such Taper-Flat sliders, having a "catamaran" recording face with rail faces characterized here as "tapered-flat" (TF) air bearings. This Taper-Flat configuration will be seen to eliminate instabilities associated with conventional "flat" catamaran faces, as well as producing other advantageous features and characteristics.

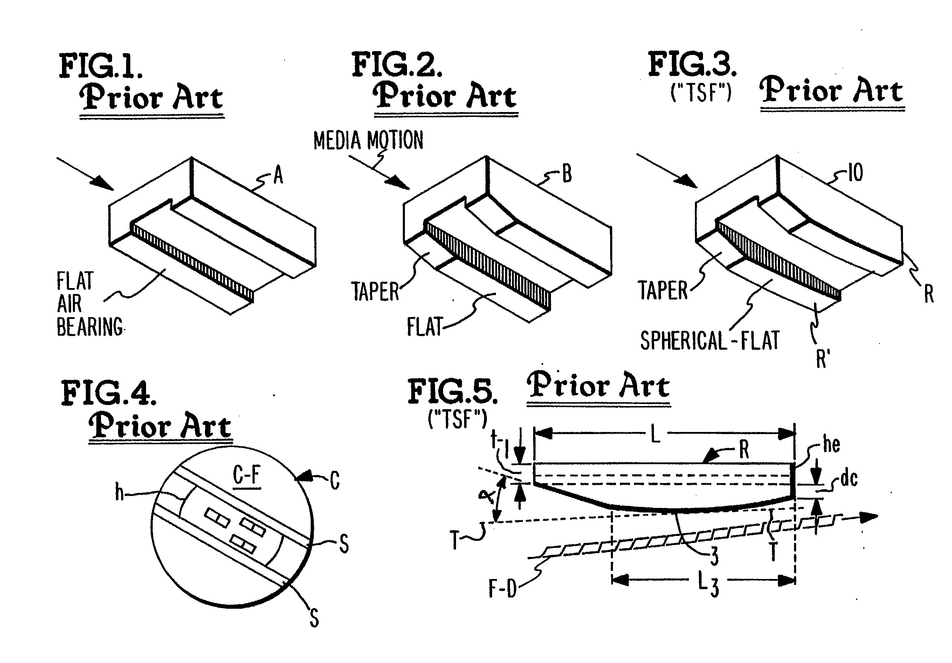

Workers are familiar with the "flat air-bearing" (FIG. 1) and the "taper-flat" air bearing (FIG. 2) configurations of the (catamaran rails of) conventionally known flying face configurations for non-contact recording on disk media. FIGS. 1 and 2 indicate these rather schematically. Also a "taper-flat" configuration is indicated, for example, in U.S. Patent No. 3,823,4l6 to Warner, issued July 9, l974. This patent shows a magnetic head assembly apparently adapted for use with rigid magnetic disks, being thrust into contact therewith at times and flown over the disks at times. In this patent, a magnetic slider body is shown including three spaced "rails" with the bottom surfaces of the two outboard rails forming a "taper-flat" air-bearing surface. A magnetic core is longitudinally aligned with the center rail so as to define the transducing gap, this gap located at the "roll axis" so as to maintain the gap at substantially constant spacing from the record surface, even during rolling motions of the assembly. Such "catamaran" structures are typically adopted to "bring one closer to the media". While they have found considerable success with rigid media, a "taper-flat" catamaran has not been used to burnish. This invention is particularly adapted to providing such "taper-flat" air-bearing surfaces with a relatively flat (very large radius) spherical (or cylindrical) surface particularly adapted for burnishing.

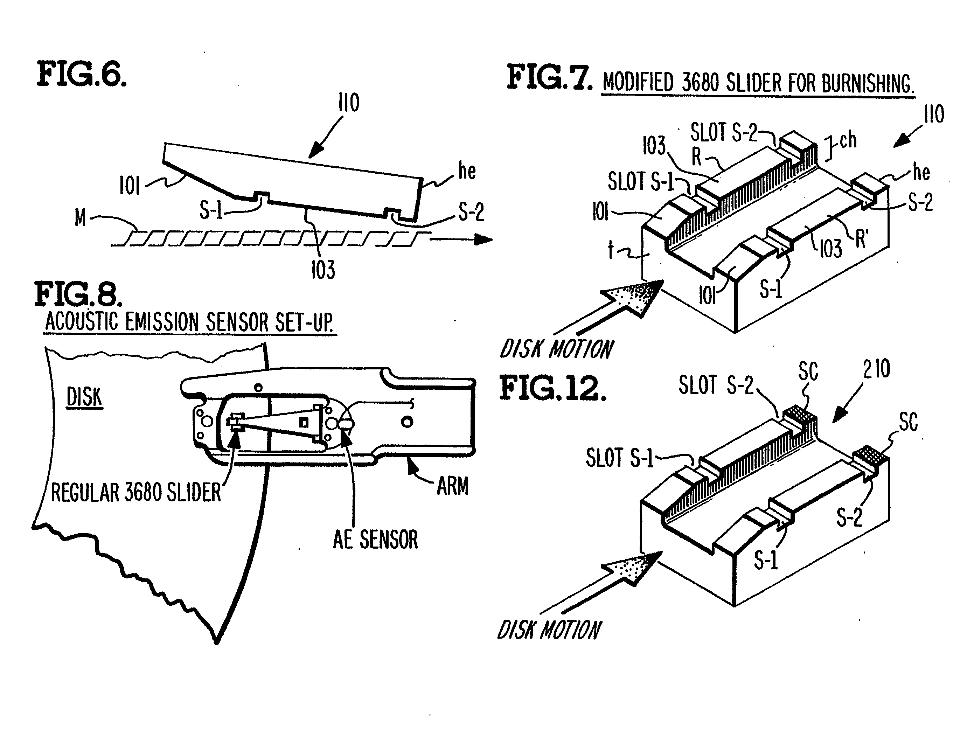

The burnishing arrangement and the burnishing method of the invention are characterized in that each rail of the air bearing surface means is provided with transverse slot means adapted to enhance burnishing of record media. In one such embodiment (FIG. 7) two slots, one near the front ramp and the other near the trailing edge, of desired sizes (~ 0.254 mm wide and 0.127 mm–0.254 mm deep), have been made so that the air bearing pressure at these slots will be relieved to the atmospheric pressure, and burnishing enhanced.

The present invention differs from these known slider recording face configurations in that it is characterized by a pair of catamaran rails which are not only tapered-flat -- as is illustrated for the Taper-Flat faces of the side rails of the embodiment 10 in FIGS. 3 and 5, but are "burnish-slotted". Such "tapered-flat" rail faces may be characterized by a relatively "large" radius (about 25.4 m), e.g., as opposed to the conventional "small" (e.g., 50.8–254 mm) radius for spherical (non-catamaran) heads familiar to workers in this art. Such a slotted Taper-Flat face is new in the art, especially for burnishing.

Such a slotted "Taper-Flat" air-bearing surface will be recognized as quite advantageous as compared with conventional burnishing means, and provide a more genuinely stable catamaran head burnish configuration for disk media.

This will be surprising to workers, especially in view of how workers expect such rail discontinuities to "upset flying" and how they expect that such slotting can cut into the media.

Also surprising, it is found that such a Taper-Flat head can be made to "fly" above media at "moderate" burnishing speeds and still nicely burnish a record surface.

## BRIEF DESCRIPTION OF THE DRAWINGS

The present invention will be better understood through reference to the following detailed description of the presently preferred embodiments, which should be considered in conjunction with the accompanying drawings, wherein like reference symbols denote like elements:

FIG. 1, a lower perspective view, simplified, of a prior art recording head characterized by catamaran rails exhibiting a "flat" air-bearing surface;

FIG. 2, a similar view of a similar prior art head having rails with taper-flat air-bearing surfaces;

FIG. 3, a similar view of a like recording head having rails with a "taper-spherical-flat" surface;

FIG. 4, a simplified plan view of a prior art spherical recording head face;

FIG. 5, a side view of an embodiment like that in FIG. 3 indicating a Taper-Flat rail surface confronting a passing disk segment;

FIG. 6, an illustration after the manner of FIG. 5 indicating Taper-Flat rail faces, with the placement of the read/write element schematically indicated.

FIG. 7 a perspective schematic view of a preferred "slotted burnishing" head;

FIG. 8 a schematic plan view of an associated "acoustic emission sensor set-up";

FIGS. 9A, 10A, 11A plot sensor output (viz. record smoothness) prior to burnishing as per this teaching, while FIGS. 9B, 10B, 11B respectively plot such output after burnishing per this teaching; and

FIG. 12 is a view after FIG. 7 of a modified head embodiment.

## DESCRIPTION OF PREFERRED EMBODIMENT

FIG. 7 indicates a preferred embodiment of the invention, namely a "slotted taper-flat" catamaran recording head ll0 understood as adapted for high speed magnetic recording disks. Such a head (or slider) is characterized by a pair of opposed catamaran rails R, R' each having a Taper-Flat flying face. Thus, each rail face will be understood as including a flat, bevel segment l0l adjacent the leading face t of the head ll0. Bevel l0l will be seen as merging into a "flat" (medium-confronting) segment l03,

extending from the bevel l0l at least midway along the remaining rail-length -- and preferably to the trailing face of the head (one rail being indicated in FIG. 6 in side elevation, and shown in typical recording orientation relative to a disk segment M, passing as indicated by the arrow). Other materials, dimensions, fabrication and operating characteristics of this, and other, embodiments will be understood as conventional as known to workers in the art.

The following exemplary dimensions, for this embodiment, may help in understanding the invention:
head, overall length: 4.064 mm
, overall width:3.175 mm
, thickness: 1.016 mm
each rail: 0.4064 mm wide with separation channel about 0.4064 mm deep
slot S-l located 0.254 mm aft of ramp l0l
slot S-2 located 0.254 mm forward of trailing-edge he
slots S-l, S-2 may be about 0.254 mm wide × about 0.127–0.254 mm deep.
The head will, in general, be constructed of a hard ferroceramic material lapped "ultra-smooth" (i.e., less than 0.0254 μm. AA roughness). Other hard, smooth wear-resistant materials may occur to workers.

More particularly, each rail will include a flat air bearing surface l03 about 3.683 mm long and a flat bevel l0l about 0.381 mm long and tapered at about 0.5 degrees (angle $\alpha$, FIG. 5) with respect to the mid-point tangent T-T to the "flat" surface l03.

Preferably, this burnishing slider is flown over the medium-to-be-burnished at relatively high speed [i.e., rotation speed of the disk about 3600 rpm or more, with the slider flying at a radius of 101.6–177.8 mm] -- e.g., recording speeds.

The principal function of forward slot S-l is to reduce pitch at such media speed (e.g., here about 50 μ-radians preferred), though it can also help cut, e.g., a very large asperity, preventing it from damaging contact with the rail air-bearing surface. In some instances, where pitch is already satisfactory (or other means are used to control it), S-l could be dispensed with. In any case its size and location will usually be determined by the desired pitch.

The principal function of aft slot S-2 is to cut away asperities, etc. and its size and location should be determined accordingly. In some cases, where more cutting is desired, more cutting slots may be added (e.g., one or more just forward of S-2); however, this should not reduce the "lift" given by the rail air-bearing surface below an adequate level (e.g., risk of crash. Further cutting may also be secured by serrating the rails at the trailing edge of the slider, or otherwise providing cutting means there. Such is indicated in FIG. l2 for slider 2l0 (like ll0 except as otherwise indicated), where the lapped air bearing surfaces at the trailing edges are serrated at sc.

## Results:

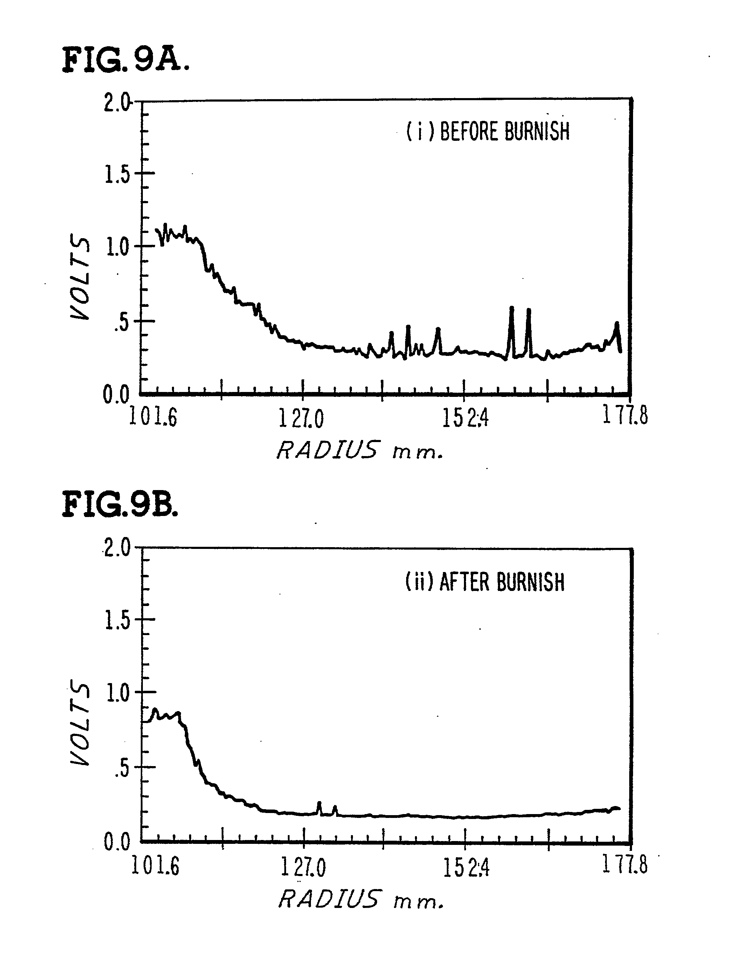

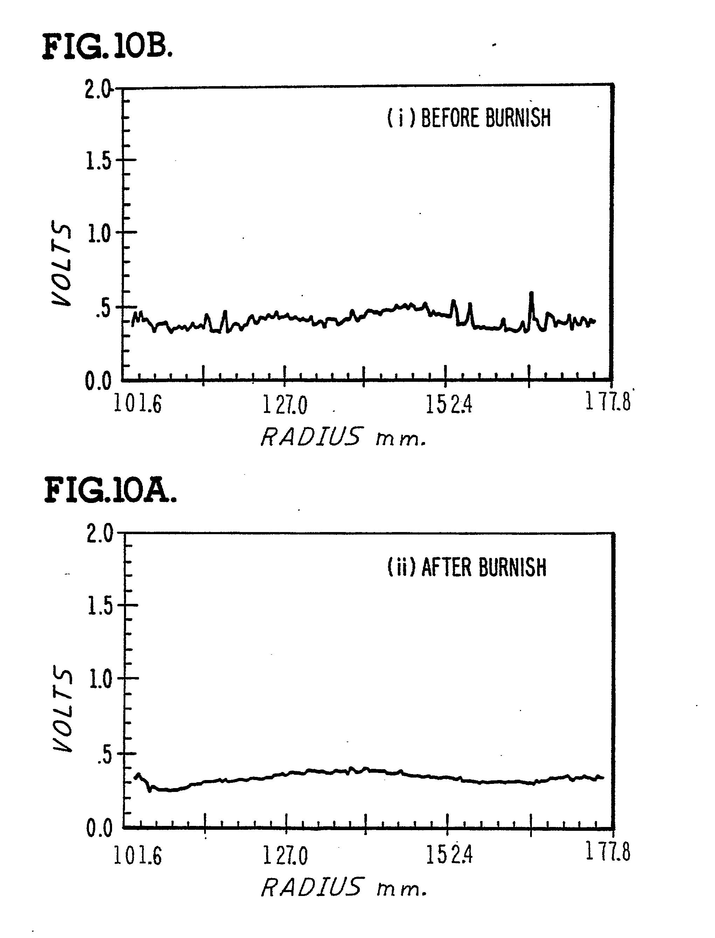

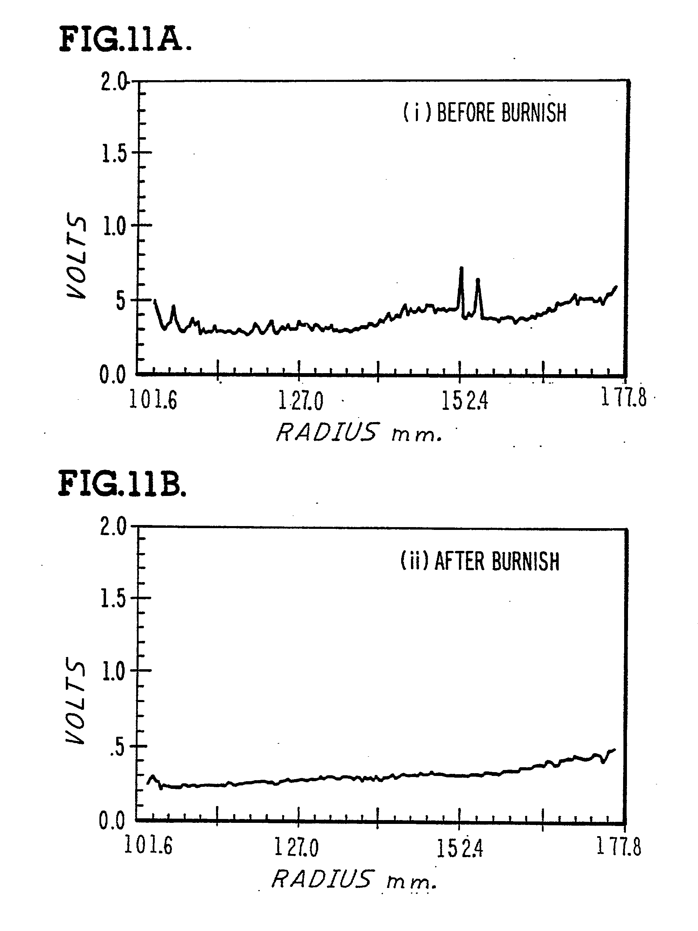

The performance of the "two-slot burnishing slider" ll0 has been evaluated using the well known Acoustic Emission (AE) test performed on relevant disks before and after burnishing with this head. The Acoustic Emission test involves placing a miniature accelerometer on the arm that carries a typical data head (e.g., see FIG. 8), and collecting data as the data head flies on the disk to be evaluated and processing the data. The processed accelerometer data (viz record asperities) is plotted in volts as a function of disk radial position of the data head as in FIGS. 9, 10 and 11. By comparing the two plots (namely plot i before, and plot ii after burnishing), the performance of the burnishing process can be evaluated. It is seen that in the "two-slot" design, the front slots S-1 modify the pitch of the slider as it flies so that the burnishing is more effective. The major cutting is done, it seems, by the rear slots (S-2).

Advantages over old methods:

The slotted slider design is stable; such a head can be loaded or unloaded as the disk is rotating.

Desired burnishing flying heights can be achieved by simply providing the appropriate number of slots, and correctly locating them.

No special arrangement to remove burnished debris is necessary as the slots help to readily collect debris that may be periodically cleaned-off.

No extra tedious manufacturing steps are necessary to make such "slotted slider" heads as the slots can be easily machined-out on an already-made conventional slider.

And, ordinary recording sliders that have been rejected for reasons other than faulty air-bearing performance (e.g., with defective transducers, etc.) may be recovered by using this design and adapting them for burnishing (after "slotting").

Alternative embodiments:

Workers will recognize that the foregoing principles of the invention may be modified to produce alternative embodiments. For instance, it should be understood that three-rail sliders may be likewise slotted; also sliders with "spherical-flat" rail faces (i.e., having a curvature-radius of 25.4 m or more may be similarly slotted). And, in certain cases it will be feasible to use such a slotted catamaran head for burnishing of other rigid media.

For example, the means and methods disclosed herein are also applicable to other like forms of rigid media. Also, this invention is believed applicable for providing improved transducer media relation in other like forms of recording and/or reproducing systems, such as those in which data is recorded and reproduced electrostatically, optically, etc.

**Claims**

1. A burnishing arrangement (110, 210) comprising recording means adapted to be flown above prescribed media (M), the recording means comprising a number of identical elongate air-bearing rail surface means (R, R') adapted to be flown relatively close to said media, each air-bearing rail surface being characterized in that each surface is provided with transverse slot means (S-1, S-2), adapted to enhance burnishing of said media.

2. The arrangement as recited in claim I, as part of a read/write head including at least two slider rails (R, R') with one rail along each side of the head face adjacent the medium (M), each air-bearing rail surface being characterized by one or more slots (S-1, S-2) cut across its width.

3. The arrangement as recited in claim 2, wherein each said medium-confronting air-bearing rail surface is characterized by a flat bevelled leading portion (101) followed by a relatively "flat" portion (103) downstream therefrom, with at least one cutting-slot (S-2) adjacent each rail trailing edge plus pitch-adjust means.

4. The arrangement as recited in claim 3, wherein the pitch-adjust means comprises a forward-slot (S-1) just aft of the bevelled leading portion (101), all slots being slotted identically to be a few hundredths of mm wide and a few hundredths of mm deep.

5. The arrangement as recited in claim I, as part of an assembly for burnishing a magnetic recording surface of said media (M) during relative movement between the assembly and this recording surface, such assembly comprising: a magnetic slider body (110, 210), including at least two elongate slider rails (R, R'), each rail having an elongate record-confronting air-bearing surface; and slot means (S-1, S-2) disposed along each such air-bearing rail surface and adapted to be presented in intimate burnish-relation with said media.

6. The arrangement as recited in claim 5, wherein said record-confronting rail surfaces are substantially co-planar, and provide substantially the entire effective air-bearing surface for the slider-body; the slot means (S-1, S-2) comprising a forward-slot (S-1) for pitch-reduction and at least one aft slot (S-2) for burnish-cutting.

7. The arrangement as recited in claim I, wherein the air-bearing rail surface means is provided as the media-confronting face of magnetic recording slider rails adapted to be flown, at high burnish-speeds, over a recording disk; the slot means comprising at least one cutting slot (S-2) adjacent the trailing edge of each rail.

8. The arrangement as recited in claim 7, as adapted for use with media traveling at recording velocity or greater, each rail including pitch-adjustment means (S-1).

9. The arrangement as recited in claim 7, wherein two or more slider rails (R, R') are present, with the outer air-bearing rail surfaces including a bevelled leading portion (101), and an adjacent relatively "flat" portion (103), this flat portion characterized by a forward slot (S-1) for pitch adjustment and one or more cutting-slots (S-2) adjacent each rail trailing edge.

10. The arrangement as recited in claim 9, wherein said forward-slot (S-1) is located just aft of the leading portion and the cutting-slots (S-2) are located just forward of the trailing edge of each slider rail.

11. The arrangement as recited in claim 1, wherein each air-bearing rail surface is slotted for pitch adjustment and for burnish-cutting.

12. A method of burnishing magnetic recording surfaces comprising the steps of: providing magnetic recording slider means (110, 210) adapted to be translated in flying relation with said surfaces, the recording means comprising a number of air-bearing rail surface means (R, R') adapted to be flown above said surfaces relatively close thereto, this surface means being provided with a plurality of identical elongate air-bearing surfaces, each surface being characterized by transverse slot means (S-1, S-2) adapted to enhance burnishing.

13. The method as recited in claim 12, wherein the air-bearing surfaces are part of a read/write head including at least two slider rails (R, R'), and whereby the air-bearing surfaces comprise the medium-confronting air-bearing rail surfaces, each air-bearing rail surface being characterized by one or more burnishing slots (S-2) adjacent its trailing edge.

14. The method as recited in claim 13, wherein each said medium-confronting air-bearing rail surface is characterized by a flat bevelled leading portion (101) followed by a "flat" portion (103) downstream therefrom, with a forward pitch-adjust slot (S-1) and one or more aft cutting-slots (S-2); the slider being translated relative its recording surface at relatively high recording-level velocity and the forward slot being dimensioned and disposed to maintain optimum burnish-pitch at this velocity.

15. The method as recited in claim 14, wherein said "flat" air-bearing rail surfaces include a number of such slots (S-1, S-2), each slot being a few hundredths of mm wide and a few hundredths of mm deep.

16. The method as recited in claim 12, wherein the slider means is part of an assembly for burnishing a magnetic recording surface, this assembly comprising: a magnetic slider body, including at least two elongate slider rails (R, R'), each rail having an elongate relatively-flat record-confronting air-bearing surface with slotting means (S-1, S-2) disposed along each such air-bearing rail surfaces; and presenting these rail-surfaces in intimate burnish-relation with such a record surface.

17. The method as recited in claim 16, wherein said record-confronting rail surfaces are made substantially co-planar to provide substantially the entire effective air-bearing surface for each said rail (R, R'); and wherein the slot means (S-1, S-2) is dimensioned and disposed to enhance burnishing; the recording surface being translated past the slider means at recording-velocity or greater.

18. The method as recited in claim 12, wherein the slotted air-bearing surface means are presented as the media confronting face of a magnetic recording head and are flown, at high speed, over the recording surface of a rigid disk.

19. The method as recited in claim 18, as adapted for use with media traveling at recording velocity or more with the slot means dimensioned and disposed for burnish-cutting and for pitch-adjustment.

20. The method as recited in claim 18, wherein said face is provided as two or more slider rails (R, R'), each rail presenting the said air-bearing surface means and each rail made to include a bevelled leading portion (101), plus an adjacent "flat" portion (103), this flat portion characterized by a pitch-adjust slot (S-1) and a cutting-slot (S-2).

21. The method of claim 20, wherein the pitch-adjust slot (S-1) is disposed on a forward portion of each air-bearing rail surface and one or more cutting slots (S-1) are disposed adjacent each rail trailing edge.

22. The method as recited in claim 12, wherein each said working segment of a rail is configured into a large-radius configuration having a minimum radius of curvature of approximately 25.4 meters, and includes at least one slot (S-2) for burnish cutting plus pitch-adjust means.

## Revendications

1. Dispositif de brunissage (110, 210) comportant un patin destiné à flotter au-dessus d'un support déterminé (M), le moyen d'enregistrement comportant un certain nombre de surfaces de rail de paliers pneumatiques, inclinées en biseau, identiques (R, R') destinées à flotter à une distance relativement réduite sur le support, chaque surface de rail de palier pneumatique étant caractérisée en ce qu'elle comporte des fentes transversales (S-1, S-2) destinées à augmenter le brunissage du support.

2. Dispositif selon la revendication 1 faisant partie d'une tête d'écriture/de lecture avec au moins deux rails de patin (R, R') un rail de chaque côté de la surface de la tête au voisinage du support (M), chaque surface de rail formant palier pneumatique étant caractérisée par une ou plusieurs fentes (S-1, S-2) découpées en travers de la surface.

3. Dispositif selon la revendication 2 dans lequel chaque surface de rail de palier pneumatique en regard du support est caractérisée par une partie frontale en biseau, plate (101), suivie par une partie relativement plate (103) en aval, avec au moins une fente découpée (S-2) au voisinage de chaque bord arrière du rail ainsi que des moyens de réglage de pas.

4. Dispositif selon la revendication 3, caractérisé en ce que le moyen de réglage de pas se compose d'une fente avant (S-1) qui se trouve directement après la partie frontale en biseau (101), toutes les fentes étant découpées de manière identique et on quelques centièmes de millimètres de largeur et quelques centièmes de profondeur.

5. Dispositif selon la revendication 1 comme faisant partie d'un assemblage pour brunir une surface d'enregistrement magnétique du support (M) pendant le mouvement relatif entre l'assemblage et la surface d'enregistrement, assemblage caractérisé en ce qu'il comprend : un corps de patin magnétique (110, 210) avec au moins deux rails de glissement, inclinés en biseau (R, R'), chaque rail ayant une surface formant palier pneumatique destinée à venir en regard d'un enregistrement allongé et d'une fente (S-1, S-2) le long de chaque surface de rail de palier pneumatique et destinée à être présentée en contact intime de brunissage avec le support.

6. Dispositif selon la revendication 5, caractérisé en ce que les surfaces de rail en regard de l'enregistrement sont essentiellement coplanaires et offrent pratiquement toute la surface active comme palier pneumatique pour le corps du patin, le moyen à fentes (S-1, S-2) étant formé d'une fente avant (S-1) pour la réduction du pas et au moins une fente arrière (S-2) pour la coupe de brunissage.

7. Dispositif selon la revendication 1, caractérisé en ce que la surface principale du rail formant palier pneumatique est prévue comme surface destinée à venir en regard du support sur des rails de patins d'enregistrement magnétiques pour flotter aux vitesses de brunissage élevées par-dessus un disque d'enregistrement, le moyen à fentes étant formé d'au moins une fente de coupe (S-2) voisine du bord arrière de chaque rail.

8. Dispositif selon la revendication 7 adaptée à un support défilant à la vitesse d'enregistrement ou à une vitesse supérieure, chaque rail comportant un moyen de réglage de pas (S-1).

9. Dispositif selon la revendication 7, caractérisé en ce qu'il comporte deux ou plus de deux rails de glissement (R, R'), les surfaces de rail des paliers pneumatiques extérieurs ayant une partie avant, en biseau (101) et une partie adjacente relativement "plate" (103), cette partie plate étant caractérisée par une fente avant (S-1) pour le réglage du pas et une ou plusieurs fentes de coupe (S-2) adjacentes à chaque bord arrière de rail.

10. Dispositif selon la revendication 9, caractérisé en ce que la fente (S-1) se trouve après la partie frontale et les fentes de coupe (S-2) se trouvent directement en avant du bord arrière de chaque rail de glissement.

11. Dispositif selon la revendication 1, caractérisé en ce que chaque surface de rail de palier pneumatique est fendue pour le réglage du pas et pour la découpe de brunissage.

12. Procédé de brunissage de surface d'enregistrement magnétiques comprenant les étapes suivantes:
– on réalise un patin d'enregistrement magnétique (110, 210) destiné à être déplacé en flottant sur les surfaces, le moyen d'enregistrement comportant un certain nombre de surfaces de rail formant paliers pneumatiques (R, R') destinés à flotter au-dessus des surfaces, à proximité immédiate, ces surfaces comportant un ensemble de surfaces de paliers pneumatiques, inclinées en biseau, identiques, chaque surface étant caractérisée par un moyen à fentes transversales (S-1, S-2) destiné à améliorer le brunissage.

13. Procédé selon la revendication 12, caractérisé en ce que les surfaces formant paliers pneumatiques font partie d'une tête de lecture/écriture ayant au moins deux rails de glissement (R, R') et les surfaces des paliers pneumatiques comportent des surfaces de rail de paliers pneumatiques venant en regard du support, chaque surface de rail de palier pneumatique étant caractérisée par une ou plusieurs fentes de brunissage (S-2) au voisinage de son bord arrière.

14. Procédé selon la revendication 13 dans lequel chaque surface de rail formant palier pneumatique en regard du support est caractérisée par une partie avant en biseau, plate (101) suivie par une partie plate (103) en aval avec une fente avant (S-1) de réglage du pas et une ou plusieurs fentes arrière de découpe (S-2), le patin étant déplacé par rapport à sa surface d'enregistrement à une vitesse relativement élevée correspondant à la vitesse d'enregistrement et la fente avant étant dimensionnée et positionnée pour conserver l'optimum brunissage-pas à cette vitesse.

15. Procédé selon la revendication 14, caractérisé en ce que les surfaces de rail des paliers pneumatiques plats comportent un certain nombre de fentes (S-1, S-2), chaque fente ayant une largeur de quelques centièmes de millimètre et une profondeur de quelques centièmes de millimètre.

16. Procédé selon la revendication 12 dans lequel le patin fait partie d'un assemblage de brunissage d'une surface d'enregistrement magnétique, cet assemblage comportant:
– un corps de patin magnétique avec au moins deux rails de patin inclinés en biseau (R, R'), chaque rail ayant une surface formant palier pneumatique, relativement plate, destinée à venir en regard de l'enregistrement, cette surface ayant des moyens à fentes (S-1, S-2) le long de chacune des surfaces de rail formant paliers pneumatiques et on présente ces surfaces de rail en relation de brunissage intime avec une telle surface d'enregistrement.

17. Procédé selon la revendication 16, caractérisé en ce que les surfaces de rail en regard de l'enregistrement sont essentiellement coplanaires pour avoir comme surfaces actives pratiquement toute la surface de palier pneumatique pour chaque rail (R, R') et le moyen à fentes (S-1, S-2) est dimensionné et positionné pour augmenter le brunissage, la surface d'enregistrement défilant devant le patin à une vitesse au moins égale à la vitesse d'enregistrement.

18. Procédé selon la revendication 12, caractérisé en ce que les surfaces formant paliers pneumatiques, fendus, sont présentées comme surfaces en regard du support pour une tête d'enregistrement magnétique et on les fait flotter à vitesse élevée au-dessus de la surface d'enregistrement d'un disque rigide.

19. Procédé selon la revendication 18, appliqué à un support défilant à la vitesse d'enregistrement ou à une vitesse supérieure, le moyen à fentes étant dimensionné et disposé pour découper et brunir et pour régler le pas.

20. Procédé selon la revendication 18, caractérisé en ce que la surface comporte deux ou plusieurs rails de glissement (R, R'), chaque rail présentant sa surface de palier pneumatique et chaque rail ayant une partie amont en biseau (101) et une partie adjacente plate (103), cette partie plate étant caractérisée par une fente de réglage de pas (S-1) et une fente de découpe (S-2).

21. Procédé selon la revendication 20, caractérisé en ce que la fente de réglage de pas (S-1) se trouve dans la partie avant de chaque surface de rail formant palier pneumatique et une ou plusieurs fentes de découpe (S-2) se trouvent au voisinage de chaque bord arrière de rail.

22. Procédé selon la revendication 12, caractérisé en ce que chaque segment utile d'un rail est mis sous une forme à grand rayon de courbure ayant un rayon de courbure minimum approximativement égal à 25, 4 m et comporte au moins une fente (S-2) pour la découpe de brunissage et un moyen de réglage de pas.

**Patentansprüche**

1. Eine Polieranordnung (110, 210) mit Aufnahmegleitstückmitteln, die geeignet sind, oberhalb vorbestimmter Medien (M) zu schweben, wobei die Aufnahmemittel eine Anzahl von identischen, länglichen, luftgelagerten Schienenflächenmitteln (R, R') aufweisen, welche geeignet sind, relativ dicht oberhalb der Medien zu schweben, und wobei jede luftgelagerte Schienenfläche dadurch gekennzeichnet wird, daß jede Fläche mit Querschlitzmitteln (S-1, S-2) versehen ist, die geeignet sind, das Polieren der Medien zu erhöhen.

2. Die Anordnung nach Anspruch 1, als Teil eines Lese/Schreib-Kopfes mit mindestens zwei Gleitschienen (R, R') mit einer Schiene entlang jeder Seite der Kopffläche benachbart zum Medium (M), wobei jede luftgelagerte Schienenfläche gekennzeichnet ist durch einen oder mehrere quer über ihre Breite eingeschnittene Schlitze (S-1, S-2).

3. Die Anordnung nach Anspruch 2, bei welcher jede dem Medium gegenüberliegende, luftgelagerte Schienenfläche gekennzeichnet ist durch einen flachen, abgeschrägten führenden Abschnitt (101), der von einem relativ "ebenen" Abschnitt (103) in Strömungsrichtung gefolgt wird, wobei mindestens ein Schneidschlitz (S-2) benachbart zu jeder nachlaufenden Schienenkante plus Neigungseinstellmitteln liegt.

4. Die Anordnung nach Anspruch 3, wobei die Neigungseinstellmittel einen vorderen Schlitz (S-1) direkt hinter dem abgeschrägten, führenden Abschnitt (101) aufweisen, wobei sämtliche Schlitze identisch geschlitzt sind, um einige 100 mm breit und einige 100 mm tief zu sein.

5. Die Anordnung nach Anspruch 1, als Teil einer Anordnung zum Polieren einer magnetischen Aufzeichnungsfläche der Medien (M) während einer Relativbewegung zwischen der Anordnung und dieser Aufzeichnungsfläche, wobei diese Anordnung enthält: einen magnetischen Gleitkörper (110, 210) mit mindestens zwei länglichen Gleitschienen (R, R'), wobei jede Schiene eine längliche, der Aufnahme gegenüberliegende, luftgelagerte Fläche besitzt, und Schlitzmittel (S-1, S-2), die entlang jeder luftgelagerten Schienenfläche angeordnet und geeignet sind, in enge Polierbeziehung mit den Medien dargeboten zu werden.

6. Die Anordnung nach Anspruch 5, bei welcher die der Aufnahme gegenüberliegenden Schienenflächen im wesentlichen coplanar sind und im wesentlichen die gesamte effektive luftgelagerte Fläche für den Gleitkörper bilden; wobei die Schlitzmittel (S-1, S-2) einen vorderen Schlitz (S-1) für die Neigungsreduzierung und mindestens einen hinteren Schlitz (S-2) zum Polierschneiden aufweisen.

7. Die Anordnung nach Anspruch 1, bei welcher die luftgelagerten Schienen Flächenmittel als den Media gegenüberliegende Fläche von magnetischen Aufzeichnungsgleitschienen vorgesehen sind, welche geeignet sind, bei hohen Poliergeschwindigkeiten über einer aufnehmenden Scheibe zu schweben; wobei die Schlitzmittel mindestens einen Schneidschlitz (S-2) benachbart zur nachlaufenden Kante jeder Schiene aufweisen.

8. Die Anordnung nach Anspruch 7, welche für die Verwendung mit Medien geeignet ist, die sich mit Aufzeichnungsgeschwindigkeit oder schneller bewegen, wobei jede Schiene Neigungseinstellmittel (S-1) aufweist.

9. Die Anordnung nach Anspruch 7, bei welcher zwei oder mehrere Gleitschienen (R, R') vorhanden sind, wobei die äußeren luftgelagerten Schienenflächen einen abgeschrägten, führenden Abschnitt (101) und einen benachbarten relativ "ebenen" Abschnitt (103) aufweisen, wobei dieser ebene Abschnitt gekennzeichnet ist durch einen vorderen Schlitz (S-1) zur Neigungseinstellung und einen oder mehrere Schneidschlitze (S-2) benachbart zu jeder nachlaufenden Schienenkante.

10. Die Anordnung nach Anspruch 9, bei welcher der vordere Schlitz (S-1) direkt hinter dem führenden Abschnitt angeordnet und die Schneidschlitze (S-2) direkt vor der nachlaufenden Kante jeder Gleitschiene angeordnet sind.

11. Die Anordnung nach Anspruch 1, bei welcher jede luftgelagerte Schienenfläche zur Neigungseinstellung und zum Polierschleifen geschlitzt ist.

12. Ein Verfahren zum Polieren magnetischer Aufzeichnungsflächen mit den Schritten: Schaffung magnetischer Aufzeichnungsgleitmittel (110, 210), die geeignet sind, in fliegender Anordnung zu den Flächen verschoben zu werden, wobei die Aufzeichnungsmittel eine Anzahl von luftgelagerten Schienenflächenmitteln (R, R') aufweisen, die geeignet sind, um über den Flächen relativ dicht zu schweben, die Flächenmittel mit einer Anzahl von identischen, länglichen luftgelagerten Flächen versehen sind und jede Fläche gekennzeichnet ist durch Querschlitzmittel (S-1, S-2), die geeignet sind, das Polieren zu erhöhen.

13. Das Verfahren nach Anspruch 12, bei welchem die luftgelagerten Flächen Teil eines Lese/Schreib-Kopfes mit mindestens zwei Gleitschienen (R, R') sind und wodurch die luftgelagerten Flächen die dem Medium gegenüberliegenden, luftgelagerten Schienenflächen aufweisen, wobei jede luftgelagerte Schienenfläche gekennzeichnet ist durch einen oder mehrere benachbart zur nachlaufenden Kante liegende, polierende Schlitze (S-2).

14. Das Verfahren nach Anspruch 13, bei welchem jede dem Medium gegenüberliegende luftgelagerte Schienenfläche gekennzeichnet ist durch einen ebenen, abgeschrägten führenden Abschnitt (101), der von einem "ebenen" Abschnitt (103) in Strömungsrichtung gefolgt wird, wobei ein vorderer Neigungseinstellschlitz (S-1) und ein oder mehrere hintere Schneidschlitze (S-2) vorgesehen sind; wobei das Gleitstück gegenüber seiner Aufzeichnungsfläche bei relativ hoher Aufzeichnungsgeschwindigkeit bewegt wird und der vordere Schlitz so dimensioniert und angeordnet ist, daß die optimale Polierneigung bei dieser Geschwindigkeit aufrechterhalten wird.

15. Das Verfahren nach Anspruch 14, bei welchem die "ebenen" luftgelagerten Schienenflächen eine Anzahl solcher Schlitze (S-1, S-2) aufweisen, wobei jeder Schlitz einige 100 mm breit und einige 100 mm tief ist.

16. Das Verfahren nach Anspruch 12, bei welchem die Gleitmittel Teil einer Anordnung zum Polieren einer magnetischen Aufzeichnungsfläche sind, wobei diese Anordnung enthält: einen magnetischen Gleitkörper mit mindestens zwei länglichen Gleitschienen (R, R'), wobei jede Schiene eine längliche, relativ ebene, der Aufzeichnung gegenüberliegende luftgelagerte Fläche besitzt, wobei Schlitzmittel (S-1, S-2) entlang jeder dieser luftgelagerten Schienenflächen angeordnet sind; und Darbieten dieser Schienenflächen in enger Polieranordnung zu solch einer Aufzeichnungsfläche.

17. Das Verfahren nach Anspruch 16, bei welchem die der Aufnahme gegenüberliegenden Schienenflächen im wesentlichen coplanar ausgebildet sind, um im wesentlichen die gesamte effektive luftgelagerte Fläche für jede Schiene (R, R') zu bilden; und bei welchem die Schlitzmittel (S-1, S-2) dimensioniert und angeordnet sind, um das Polieren zu erhöhen; wobei die Aufzeichnungsfläche an den Gleitmitteln vorbei bei Aufzeichnungsgeschwindigkeit oder größer vorbeibewegt wird.

18. Das Verfahren nach Anspruch 12, bei welchem die geschlitzten luftgelagerten Oberflächenmittel als den Medien gegenüberliegende Fläche eines magnetischen Aufzeichnungskopfes dargeboten werden und bei hoher Geschwindigkeit über die Aufzeichnungsfläche einer starren Scheibe schweben.

19. Das Verfahren nach Anspruch 18, welches für die Verwendung mit Medien geeignet ist, die sich bei Aufzeichnungsgeschwindigkeit oder mehr bewegen, wobei die Schlitzmittel für das Polierschneiden und für die Neigungseinstellung dimensioniert und angeordnet sind.

20. Das Verfahren nach Anspruch 18, bei welchem die Fläche als zwei oder mehrere Gleitschienen (R, R') ausgebildet ist, wobei jede Schiene die luftgelagerten Flächenmittel darbietet und jede Schiene hergestellt ist, um einen abgeschrägten, führenden Abschnitt (101) aufzuweisen, plus einem benachbarten, "ebenen" Abschnitt (103), wobei dieser ebene Abschnitt gekennzeichnet ist durch einen Neigungseinstellschlitz (S-1) und einen Schneidschlitz (S-2).

21. Das Verfahren nach Anspruch 20, bei welchem die Neigungseinstellschlitze (S-1) an einem vorderen Abschnitt jeder luftgelagerten Schienenfläche angeordnet ist und eine oder mehrere Schneidschlitze (S-2) benachbart zu jeder nachlaufenden Schienenkante angeordnet sind.

22. Das Verfahren nach Anspruch 12, bei welchem jedes Arbeitssegment einer Schiene in einem einen großen Radius enthaltenden Aufbau mit einem minimalen Bogenradius von etwa 25,4 m aufgebaut ist und mindestens einen Schlitz (S-2) zum Polierschneiden plus Neigungseinstellmittel aufweist.

# FIG.1.
## Prior Art

FLAT AIR BEARING

A

# FIG.2.
## Prior Art

MEDIA MOTION

B

TAPER

FLAT

# FIG.3.
("TSF")  ## Prior Art

10

TAPER

SPHERICAL-FLAT

R'

R

# FIG.4.
## Prior Art

C-F

C

h

S

S

# FIG.5.  ## Prior Art
("TSF")

t-l

L

R

he

dc

α

T

F-D

3

T

L_3

EP 0 231 625 B1

## FIG.6.

## FIG.7. MODIFIED 3680 SLIDER FOR BURNISHING.

DISK MOTION

## FIG.8.
ACOUSTIC EMISSION SENSOR SET-UP.

DISK

REGULAR 3680 SLIDER

AE SENSOR

ARM

## FIG.12.

SLOT S-2    SC    210

SLOT S-1    SC

S-2

S-1

DISK MOTION

EP 0 231 625 B1

# FIG. 9A.

(i) BEFORE BURNISH

VOLTS

2.0 — 1.5 — 1.0 — .5 — 0.0

101.6          127.0          152.4          177.8

RADIUS mm.

# FIG. 9B.

(ii) AFTER BURNISH

VOLTS

2.0 — 1.5 — 1.0 — .5 — 0.0

101.6          127.0          152.4          177.8

RADIUS mm.

# FIG.10B.

(i) BEFORE BURNISH

# FIG.10A.

(ii) AFTER BURNISH

## FIG.11A.

## FIG.11B.